(19) Europäisches Patentamt

European Patent Office

Office européen des brevets

(11) **EP 0 840 238 A1**

## (12) EUROPEAN PATENT APPLICATION

(43) Date of publication:
06.05.1998 Bulletin 1998/19

(51) Int. Cl.$^6$: **G06F 15/80**

(21) Application number: 96307854.8

(22) Date of filing: 30.10.1996

(84) Designated Contracting States:
AT BE CH DE DK ES FI FR GB GR IE IT LI LU MC NL PT SE
Designated Extension States:
AL LT LV RO SI

(71) Applicant:
BRITISH TELECOMMUNICATIONS public limited company
London EC1A 7AJ (GB)

(72) Inventor: **Webb, Roderick Peter**
**Woodbridge, Suffolk IP13 0DX (GB)**

(74) Representative:
**Read, Matthew Charles et al**
**Venner Shipley & Co.**
**20 Little Britain**
**London EC1A 7DH (GB)**

(54) **An artificial neural network**

(57) An artificial neural network, for example a Hopfield network, includes a number of interconnected neurons, one of which (4) is shown individually and the others are shown schematically as a weight matrix (1). A bi-level threshold circuit (5) receives a weighted sum of the outputs of other neurons from the matrix (1) and a noise signal from a noise source (n(t)). The output from the threshold circuit is filtered by a low pass filter (2) and the resulting activation function for the neuron approximates to a continuously variable non-linear function.

$$v_i = 1 \text{ if } u_i + n(t) > 0$$
$$v_i = 0 \text{ if } u_i + n(t) < 0$$

Fig 4. Comparator with noise added to the input signal.

## Description

This invention relates to an artificial neural network, particularly but not exclusively a Hopfield neural network, for example to control packet switching in a packet switching network.

Artificial neural networks have been employed for many applications including pattern recognition and classification, content-addressable memory and combinatorial optimisation. For a general review, reference is directed to J. Hertz, A. Krogh and R.G. Palmer, "Introduction to the theory of neural computation", Addison-Wesley, Redwood City, CA, 1991.

The individual neurons of the neural network may be connected together according to a number of different known schemes. They may be arranged in layers as in the case of a multi-layer perceptron, in which all the inputs to a given neuron are derived from the layer above. Another example is the Hopfield network in which the neurons are mutually interconnected through neural weights. Many other connection schemes are well known in the art.

Neural networks have been proposed for controlling packet switching in a packet switching telecommunications network. As is well known, in a packet switching network, information to be transmitted is digitised and then formed into small addressable packets which are transmitted over a communications network. The packets may be transmitted in asynchronous transfer mode (ATM).

It has been proposed to apply the techniques of neural networks to switching and routing signals in an ATM network. A general review is given in T X Brown, 'Neural Networks for Switching from E C Posner, Ed', 'Special Issue on Neural Networks in Communications', IEEE Communications Magazine, p72, November 1989; see also A Maren, C Hartson and R Rap, 'Handbook of Neural Computing Applications', Academic Press, London, 1990.

In our WO-A-94/24637, there is described a neural network based on the Hopfield model which is used to operate a high speed packet switch.

Neural networks can be implemented in hardware and software. The behaviour of individual neurons is commonly represented by a continuous non-linear function such as a sigmoid. Thus the neuron provides an output which is related in a continuous, non-linear manner to the value of a combination of values of inputs to the neuron. This characteristic is known as the activation function. When the network is implemented in hardware, the activation function is commonly provided by an amplifier with a non-linear response, but an amplifier with a predetermined response such as a sigmoid is much more difficult to construct than a conventional bi-level thresholding device such as a comparator, especially when speed is required.

In accordance with the invention, it has been found that networks of thresholding devices can be configured to behave in the same way as a network of neurons with continuous non-linear activation functions, if noise is added to their inputs.

Broadly stated, the present invention provides an artificial neural network including a neuron at which signals from other neurons are combined to provide an output, the neuron including thresholding means for the combined signals, means to apply a time varying perturbation signal to the thresholding means, and means to filter the output.

The perturbation signal may comprise a noise signal and the noise may comprise white noise.

The thresholding means may exhibit a stepped transfer function so as to produce a signal with either a first or a second different discrete level depending on the level of the signals input thereto relative to a given threshold, which in combination with the filtering performed by the filtering means corresponds to a continuously variable non-linear transfer function.

The continuously variable non-linear transfer function may approximate to a sigmoid function.

In order that the invention may be more fully understood, embodiments thereof will now be described by way of example with reference to the accompanying drawings, in which:

Figure 1 is a general block diagram of a conventional artificial neural network;

Figure 2 is a graph of a sigmoid activation function for the neuron shown in Figure 1;

Figure 3 illustrates an appreciation, in accordance with the invention of how the network of Figure 1 can be rearranged without loss of functionality;

Figure 4 is a schematic block diagram of a bi-level comparator with a source of noise connected to its input; Figure 5 is a graph of the output of the circuit configuration shown in Figure 4;

Figure 6 is a schematic block diagram of an opto-electronic neuron network in accordance with the invention;

Figure 7 is a schematic block diagram of a crossbar switching arrangement for use in a packet switch telecommunications network;

Figures 8A and 8B illustrate an optical Hopfield neural network for use in the switching arrangement shown in Figure 7;

Figure 9 is a block diagram of an electrical neural network in accordance with the invention; and

Figure 10 illustrates in more detail the neuron of the network shown in Figure 9.

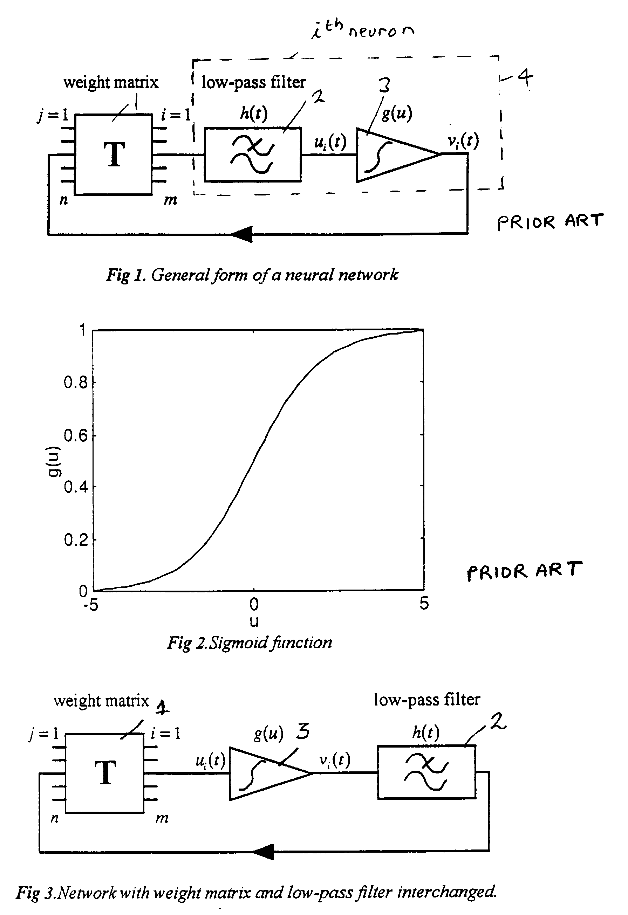

Figure 1 is a schematic block diagram of an artificial neural network in which the connections to one of its constituent neurons is shown. The network consists of a weight matrix 1 which is a schematic illustration of the weighted interconnections between a plurality of neurons in the network. In Figure 1, the weight matrix 1 is shown connected to the $i^{th}$ neuron of the network, that consists of a low pass filter 2 with an impulse response $h(t)$, which filters the weighted, combined signals from the other neurons, derived from the weight matrix 1, so as to provide a filter output signal $u_i(t)$ The filter 2 is connected to an amplifier 3 that has a non-linear transfer function $g(u)$ which produces an output $v_i(t)$ The weight matrix 1 shown in Figure 1 is general and does not imply any particular class of network, because the architecture is defined by the structure of the weight matrix. Thus, the drawing is sufficiently general to allow for the possibility of mutually interconnected neurons as in a Hopfield network, or for the separation of neurons into layers with all the connections directed to the layer above, as in a multi-layer perceptron, to give just two examples. External inputs and biases are not shown separately, but can be considered as neurons with constant outputs within the matrix.

Thus, it can be seen that the input to the $i^{th}$ neuron is the output of the weight matrix 1 convolved with impulse response of the filter 2, which can be written as

$$u_i(t) = [\sum_{j=1}^{n} T_{ij} \, v_j(t)] * h(t) > \qquad (1)$$

where $T_{ij}$ is the connection strength from the output of the $j^{th}$ neuron to the input of the $i^{th}$ neuron and, $v_j$ is the value of the output of the $j^{th}$ neuron.

The $i^{th}$ neuron produces an output of

$$v_i = g(u_i) \qquad (2)$$

As previously mentioned, $g(u)$ is a non-linear function and typically consists of a sigmoid function of the form

$$g(u) = \frac{1}{1 + e^{-\beta u}} \qquad (3)$$

where $\beta$ is a gain factor which determines the steepness of the sigmoid function. A schematic plot of the sigmoid function is shown in Figure 2.

The low pass filter 2 and the weight matrix 1 shown in Figure 1 both perform linear operations, assuming that the weight states are independent from the neuron states and that their time dependence may be neglected. It therefore follows that the two operations may be executed in the reverse order to that shown in Figure 1, as shown in Figure 3. It accordingly follows that the configuration of Figure 3 is equivalent to that of Figure 1.

The input to the $i^{th}$ neuron is unchanged because $u_i(t)$ for Figure 3 can be written as

$$u_i(t) = \sum_{j=1}^{n} T_{ij} \{ v_j(t) * h(t) \} \equiv [\sum_{j=1}^{n} T_{ij} \, v_j(t)] * h(t) \qquad (4)$$

Thus, this is identical to equation (1).

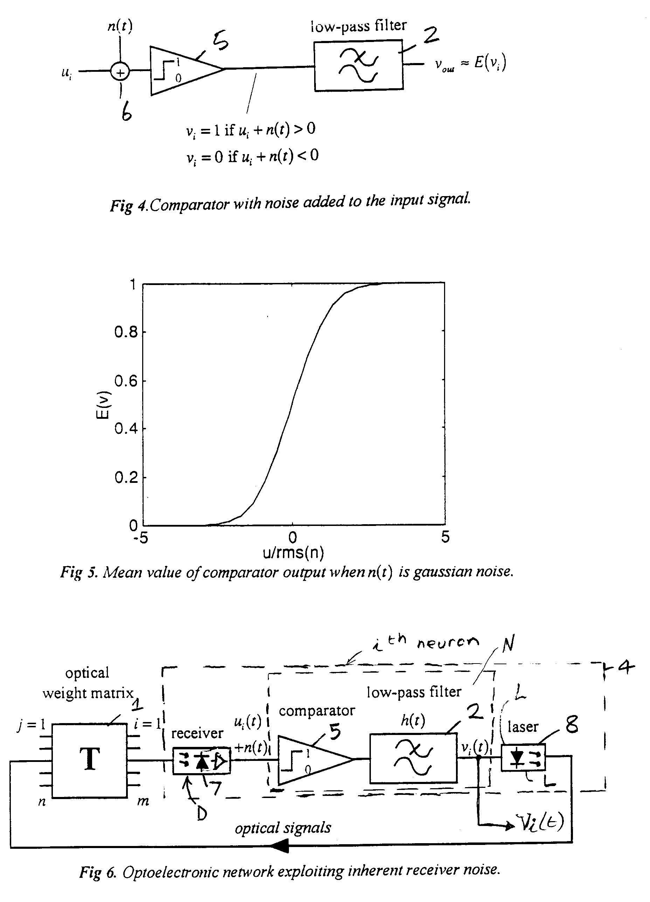

In accordance with the invention, it has been appreciated that the non-linear amplifier 3 can be replaced by a bi-level thresholding device which has a perturbing signal in the form of noise applied to its input. This arrangement is shown in Figure 4, in which a bi-level comparator 5 is coupled to receive the weight matrix input $u_i$ in combination with a noise signal $n(t)$, which in this example is summed with the input $u_i$ by means of an adding junction 6.

The output of the comparator 5 assumes a level binary 1 or 0 depending on the level of the input. More particularly:

$$v_i = 1 \text{ if } u_i + n(t) > 0 \qquad (5)$$

$$v_i = 0 \text{ if } u_i + n(t) > 0 \qquad (6)$$

The mean value of $E(v_i)$ of the output of comparator 5 corresponds to the probability that the input $(u_i + n(t))$ exceeds 0:

$$E(v_i) = P[u_i + n(t) > 0] \qquad (7)$$

In Figure 4, the low pass filter 2 is used to produce the average value $E$ of the comparator output. If the noise input $n(t)$ is Gaussian then the resultant activation function for the circuit of Figure 4 is a continuous, non-linear function which is similar to the sigmoid function shown in Figure 2. A graph of the mean value of the comparator output as a function of the input $u_i$ is shown in Figure 5.

Provided that the bandwidth of the noise signal $n(t)$ is much greater than the cut-off frequency of the low pass filter 2, the filter will yield an actual voltage close in value to the desired sigmoid distribution function. Since it is a continuous valued function that increases monotonically from 0 to 1, it is a suitable alternative to the sigmoid for use in neural networks and thus the comparator with added input noise shown in Figure 4 can be substituted into the circuit of Figure 3 without significantly altering the behaviour of the network.

An opto-electronic example of such a network will now be described with reference to Figure 6. In this example, the matrix 1 is an optical matrix in which optical signals from a plurality of neurons are directed onto an optical receiver 7 associated with the $i^{th}$ neuron 4 so as to produce a weighted sum. The optical receiver 7 may comprise an optical diode followed by an electrical amplifier, which are intrinsically noisy in their operation. Thus, the receiver 7 produces an output $u_i(t) + n(t)$, where $u_i(t)$ is proportional to the weighted sum of optical signals from the weight matrix 1 and $n(t)$ comprises intrinsic essentially Gaussian white noise produced by operation of the diode and amplifier that comprise the receiver 7. These signals are applied to the comparator 5 and are filtered by the low-pass filter 2. Thus, the operation is the same as described with reference to Figure 4. The resulting electrical signal $v_i(t)$ corresponds to the signal $E(v)$ of equation (7) and is provided as an output, as will be explained in more detail later. This signal is also used to drive a laser 8 which produces an optical signal fed back into the optical weight matrix 1. Thus, the $i^{th}$ neuron exhibits an activation function which is continuous and non-linear, generally resembling a sigmoid function, which is generated using a bi-level comparator. The usually unwanted noise produced by the receiver 7 is used to advantage in order to produce the continuous activation function.

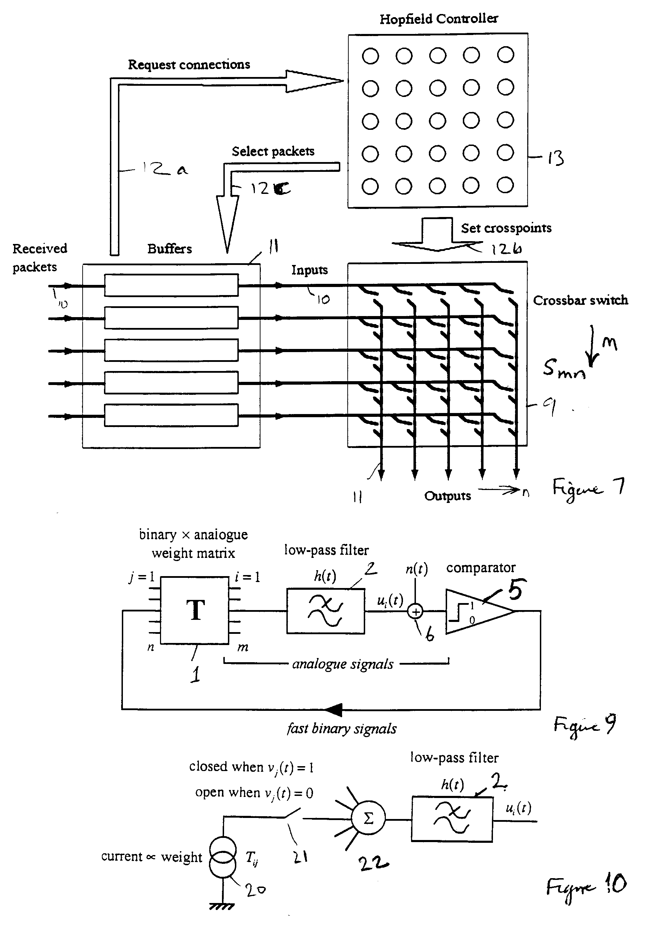

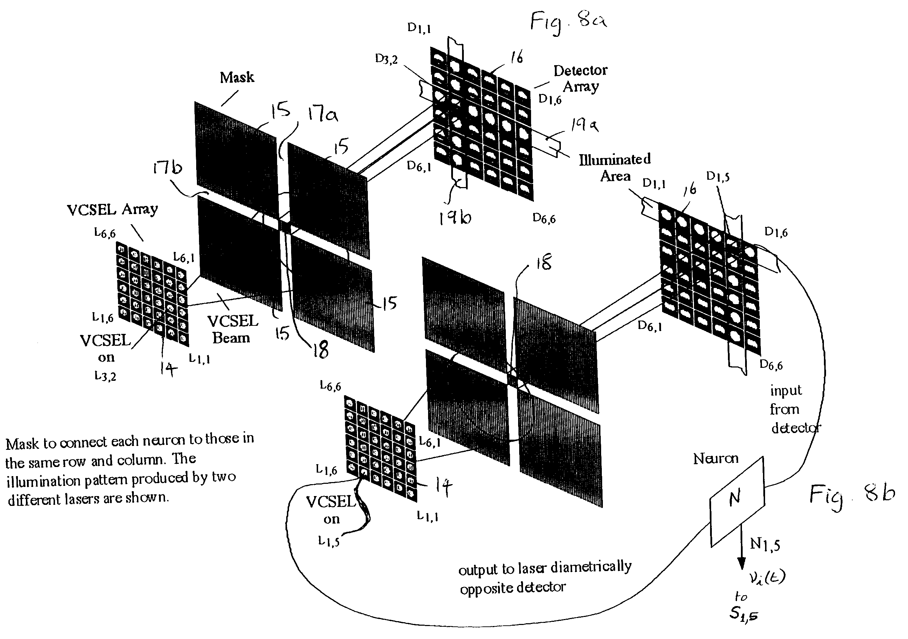

A schematic example of a packet switching system for a telecommunications network will now be described with reference to Figures 7 and 8, which makes use of a Hopfield neural network to control operation of a crossbar switch. The switching network operates generally in accordance with the principles described in our WO-A-94/24637 and the reader is referred to this document (the contents of which are incorporated herein by reference) for further details of exemplary systems with which the invention may be used.

In Figure 7, a crossbar switch 9 includes a rectangular array of switches $S_{m,n}$ arranged in n rows and m columns for providing selective connections between a plurality of input lines 10 and a plurality of output lines 11, in a manner well known *per se*. ATM digital signal packets are received on input lines 10 in buffers 11 where the addresses associated with the signal packets are read to request a particular output connection line 11 through the crossbar switch 9. The system may operate with optical or electrical ATM switch packets and in this example, it is assumed that these signals are electrical. Data concerning the addresses read from the buffers 11 are fed through bus 12a to a controller 13 that controls operation of the individual switches of the crossbar switch 9 through bus 12b. Packets in the buffers 11 are released so as to pass through the crossbar switch 9 by the controller 13 through bus 12c. In this example, the controller 13 includes a neural network that operates according to the Hopfield model and includes a m x n matrix of neurons which individually control corresponding switches $S_{m,n}$ in the crossbar switch 9. In this example, the neural network is an optical network, which is shown schematically in Figure 8.

The network includes an array 14 of vertical cavity surface emitting laser (VCSEL) devices $L_{mn}$ arranged on a common substrate (not shown), a mask 15 and an array 16 of optical detectors. The detector array 16 includes detector diodes $D_{mn}$ that correspond to each of the individual switches $S_{mn}$ of the crossbar switch 9. The array of detectors $D_{mn}$ and the array of laser elements $L_{mn}$ have the same number of rows and columns m,n. Each of the detectors $D_{mn}$ is connected to a corresponding one of the laser elements $L_{mn}$ through a respective comparator and a low pass filter (not shown in Fig. 8, for simplicity) in the manner shown for the $i^{th}$ neuron 4 illustrated in Figure 6. Thus, for each neuron in Figure 8, the detector $D_{mn}$ corresponds to the receiver 7 of Figure 6, which is connected through a comparator 5 and a filter 2 to a laser diode $L_{mn}$, that corresponds to the laser 8 in Figure 6. The individual detectors $D_{mn}$ and lasers $L_{mn}$ are interconnected for diametrically opposed positions in the arrays. In Figure 8, the m and n axial directions for the detector and laser arrays 14,16 are reversed relative to one another, so that according to the nomenclature of Figure 8, $D_{mn}$ is connected to $L_{mn}$.

In the examples of Figure 8, the arrays 14 and 16 include 6x6 elements.

This is shown schematically in Figure 8b for the laser $L_{1,5}$ and a detector $D_{1,5}$, that are interconnected by a circuit element N, which contains the comparator and the low pass filter 2 shown in Figure 6. It will be understood that mxn circuit elements N are provided to interconnect all the detectors $D_{mn}$ and the laser elements $L_{mn}$.

The mask 15 consists of an opaque panel with transparent cruciform strips 17a,17b formed therein with an opaque rectangular panel 18 formed at the intersection of the cruciform strips 17a,17b.

In use, individual laser elements $L_{mn}$ of the laser array 14 are illuminated in response to request connections from the packets held in buffers 11 (Figure 7). Referring to Figure 8a, an example is shown in which one of the laser elements $L_{3,2}$ is illuminated. This produces illumination of the transparent cruciform region 17a,17b in the mask so that corresponding illuminated areas 19a,19b which extend horizontally and vertically respectively, are produced on the detector array 16. The central opaque panel 18 of the mask produces a dark shadow over the detector $D_{3,2}$.

The individual detectors $D_{mn}$ of the array 16 are configured to drive the corresponding crossbar switches $S_{mn}$ when they are unilluminated with light from the laser array 14. As explained in our WO-A-94/24637, a number of predetermined connection rules apply to the crossbar switch. These rules require chat for any one particular input row m of the crossbar switch shown in Figure 7, only one switch $S_{mn}$ can be connected. Similarly, for any particular output column n, only one switch can be operated. In Figure 8, the mask 15 imposes this rule on the way in which the detector array is illuminated. Thus in the example of Figure 8a, the individual detector $D_{3,2}$ is not illuminated due to the effect of the central masked portion 18 whereas the remainder of the row with detectors $D_{m,2}$ and the remainder of the column $D_{3,n}$ is illuminated through the cruciform portion 17a,17b of the mask. Another example is shown in Figure 8b, in which illumination of laser $L_{1,5}$ produces corresponding masking of detector $D_{1,5}$ and illumination of the remainder of the row of detectors $D_{m,5}$ and the remainder of the column $D_{1,n}$. It will be understood in practice, a number of the lasers of array 14 will be simultaneously illuminated in response to connection requests derived from signal packets received in buffers 11 (Figure 7). The resulting illumination of the detector array 16 produces relatively low level illumination at some of the elements of array and relatively high illumination at others. Furthermore, due to the cruciform nature of the mask, only one relatively dark detector array element will be produced for each row and column intersection. Thus, the individual switching elements $S_{mn}$ of crossbar switch 9 are operated by the individual outputs $V_i(t)$ from the m x n neuron circuit elements N of the Hopfield controller 13 in response to the signals arriving at the buffers 11, with the connections being optimised by the neural network 13 in order to maximise the number of valid connections made through the crossbar switch. Since each of the detectors $D_{mn}$ of array 16 is connected in the manner shown in Figure 6 to the corresponding laser in the array 14, the inherent noise produced by the detectors $D_{mn}$ is used in combination with the individual comparators 5 and low-pass filters 2, to achieve an essentially continuous non-linear neural network activation function even though binary comparators 5 are used. Although there is some residual noise at the output of each low-pass filter 2, due to its finite averaging period, this can be beneficial in the described Hopfield network as it causes the network to escape from the metastable states which may occur as the network settles to a stable output condition.

The invention is also applicable to electrical neural networks and an example will now be described with reference to Figure 9.

In the circuit of Figure 9, the neural network makes use of a binary-analogue weight matrix for example of the type described in A. F. Murray, D. Del Corso and L. Tarassenko, "Pulse-stream VLSI neural networks mixing analog and digital techniques", IEEE Trans on Neural Networks, V2, No. 2, March 91, pp 193-204. In neural networks of this type, the signals at each neuron consist of a stream of binary pulses which are provided with an analogue weight by altering the pulse amplitude. This is shown schematically in Figure 10 in which the connection strength $T_{ij}$ from the output of the $j^{th}$ neuron to the input of the $i^{th}$ neuron is illustrated as a variable current source 20 which is switched ON or OFF by a modulator, schematically shown as switch 21.

The weighted pulse input from a number of different neurons are summed at the $i^{th}$ neuron by a summing junction 22. The resulting pulse stream is then filtered by a low-pass filter 2 in order to provide an analogue output $u_i(t)$.

In Figure 9, the output of the weight matrix 1 thus comprises streams of binary pulses with weighted amplitudes which are filtered by the low-pass filter 2 to provide the output $u_i(t)$, which is then summed with a noise signal $n(t)$ by means of a summer 6. The resultant signal is fed to a binary thresholding device in the form of a comparator 5 so as to produce an output stream of binary pulses which are fed back as an input to the binary weight matrix 1. It will be understood that the average current over time of the fast stream of binary pulses from the comparator 5 corresponds to the value of the signal $u_i(t)$ but is represented in binary form so that it can be processed by the binary, analogue weight matrix 1. The advantage of this arrangement is that the weight matrix has only to handle binary neuron states although it must perform its processing at a faster rate than in an equivalent continuously valued neural network. Instead of multiplying two sets of analogue variables, the weight matrix can be reduced to a set of gates as shown in Figure 10 which is much simpler to construct electronically, as described by Murray et al *supra*.

The described examples of networks in accordance with the invention have some features in common with stochastic networks. In stochastic networks, the neurons change randomly between binary output states with a probability governed by the neuron input. Thus, they behave like comparators with noise added to their inputs but in stochastic networks, low-pass filters are not incorporated in each neuron, which makes a significant difference in a hardware network to the complexity of the circuits. In a stochastic network, the neurons may be updated synchronously or asynchronously but any changes in the neuron states must immediately be fed back to the inputs before the next update in order for the network to remain stable. In hardware, this means that the neurons must only be allowed to change at a rate limited by the time taken for signals to pass through the weight matrix and the ancillary connections. In contrast, in the networks according to the invention described above, stability is ensured by choosing a filter time-constant long in comparison with the propagation delay through the weight matrix. The rate at which the comparators change state may be as high as desired. In fact, the faster the rate, the more closely the network approximates to the behaviour of a continuously valued neural network and the more accurate the result.

Many modifications fall within the scope of the claimed invention. For example, whilst in the described examples, the noise signal n(t) is added into the signal u(t), the noise could be applied as a separate input to the comparator device 5. Thus, the device 5 may have a first input for the signal u(t) and a second input which sets the threshold level, with the noise signal being applied to the second input so as to modulate the threshold level with time.

**Claims**

1. An artificial neural network including a neuron (4) at which signals from other neurons are combined to provide an output ($v_i(t)$), said neuron including thresholding means (5) for the combined signals, means to apply a time varying perturbation signal ($n(t)$) to the thresholding means, and means (2) to filter the output.

2. A network according to claim 1 wherein the perturbation signal comprises a noise signal ($n(t)$).

3. A network according to claim 2 wherein the noise comprises white noise.

4. A network according to any preceding claim wherein the thresholding means (5) exhibits a step transfer function so as to produce a signal with either a first or a second different discrete level depending on the level of signals input thereto relative to a given threshold, which in combination with the filtering performed by the filtering means (2) corresponds to a continuously variable non-linear transfer function.

5. A network according to claim 4 wherein said continuously variable non-linear transfer function approximates to a sigmoid function.

6. A network according to any preceding claim including a weight matrix responsive to said neuron outputs for producing weighted sums thereof to be applied to other neurons of the network.

7. A neural network according to any preceding claim that comprises a Hopfield network.

8. A network according to any preceding claim wherein the filtering means (2) is operative to filter signals from the thresholding means (5), and the noise signal ($n(t)$) is applied to an input of the thresholding means.

9. A network according to claim 8 including an optical receiver ($7,D_{m,n}$) responsive to optical signals from neurons of the network for producing an electrical signal corresponding to the combined signals together with electrical noise as a result of operation of the receiver, and the thresholding means comprises a comparator (5) for comparing the signals from the receiver with a predetermined threshold.

10. A network according to claim 9 including optical emitter means ($8,L_{mn}$) responsive to electrical signals from the thresholding means for producing an optical output from said neuron.

11. A network according to claim 10 including an array (14) of said optical emitters, an array (16) of detectors to receive optical radiation from the emitters, and masking means (15) for imposing predetermined optical weights on the radiation that impinges on the individual detectors in the array thereof.

12. A network according to claim 11 wherein the arrays comprise corresponding rows and columns of emitters and detectors respectively, and the mask comprises an opaque member with a translucent generally cruciform region therein, with a central opaque panel in the cruciform region.

13. A network according to any one of claims 1 to 7 wherein the filtering means (2) is operative to filter the signals applied to the neuron prior to thresholding by said thresholding means (5), whereby the output of the neuron is a time varying binary signal which switches between two discrete levels defined by the thresholding means in dependence upon the value of said combined signals.

14. A neural network according to any one of claims 1 to 6 wherein the neurons are arranged in layers so as to provide a multi-layer perceptron.

15. A method of operating on signals at a neuron in an artificial neural network, comprising combining signals from other neurons in the network, comparing the combined signals and a time varying perturbation signal with a threshold whereby to provide an output which assumes either a first or a second discrete signal level depending on the outcome of the comparison and performing signal filtering to provide said output.

16. A method according to claim 15 including performing the signal filtering on signals produced as a result of the comparison of said combined signals with the threshold, whereby to provide an analogue output.

17. A method according to claim 15 including performing the signal filtering on the combined signals before the comparison with the threshold whereby to provide a time varying binary output.

18. A packet switching device including a plurality of input paths (10) for signal packets including individual routing addresses, a plurality of output paths (11), a plurality of switches ($S_{mn}$) for connecting the input paths to the output paths selectively, and an artificial neural network according to any one of claims 1 to 14 responsive to the routing addresses for optimising the connections between the input and output paths made by the switches.

19. A device according to claim 18 wherein the switches ($S_{mn}$) are configured in an array of rows and columns (m,n), and the neural network is arranged to control the switches such that not more than one switch in each row and not more than one switch in each column is in the same switching state concurrently.

*Fig 1. General form of a neural network*

*Fig 2. Sigmoid function*

*Fig 3. Network with weight matrix and low-pass filter interchanged.*

Fig 4.Comparator with noise added to the input signal.

$$v_i = 1 \text{ if } u_i + n(t) > 0$$
$$v_i = 0 \text{ if } u_i + n(t) < 0$$

Fig 5. Mean value of comparator output when $n(t)$ is gaussian noise.

Fig 6. Optoelectronic network exploiting inherent receiver noise.

Hopfield Controller

Request connections

Select packets

Received packets

Buffers

Inputs

Set crosspoints

Crossbar switch

Outputs

Figure 7

binary × analogue weight matrix

low-pass filter

$h(t)$

$n(t)$

comparator

**T**

$u_i(t)$

analogue signals

fast binary signals

Figure 9

closed when $v_j(t) = 1$

open when $v_j(t) = 0$

low-pass filter

$h(t)$

current ∝ weight

$T_{ij}$

$\Sigma$

$u_i(t)$

Figure 10

Fig. 8a

Fig. 8b

Mask to connect each neuron to those in the same row and column. The illumination pattern produced by two different lasers are shown.

**European Patent Office**

## EUROPEAN SEARCH REPORT

Application Number

EP 96 30 7854

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | PROCEEDINGS OF THE INTERNATIONAL JOINT CONFERENCE ON NEURAL NETWORK (IJCNN), NAGOYA, OCT. 25 - 29, 1993, vol. 2 OF 3, 25 October 1993, INSTITUTE OF ELECTRICAL AND ELECTRONICS ENGINEERS, pages 1255-1258, XP000499891 FURUKAWA T ET AL: "BP LEARNING OF VISUAL MOTION DETECTION, AND ANALYSIS OF THE INTERNAL NN STRUCTURE THAT EMERGES" | 1-5,8, 15,16 | G06F15/80 |
| A | * page 1256, line 10 - line 24; figures 3,4 * | 6,7,9-14 | |
| Y | US 4 874 963 A (ALSPECTOR JOSHUA) 17 October 1989 * column 12, line 10 - column 13, line 22; figures 3,4 * | 1-5,8, 15,16 | |
| A | US 5 412 256 A (ALSPECTOR JOSHUA ET AL) 2 May 1995 * column 5, line 6 - column 8, line 7; figures 3-5 * | 1,15 | |
| A | WO 95 17726 A (BATTEN GEORGE W JR) 29 June 1995 * page 18, line 25 - page 19, line 17; figures 8,14,15 * | 1,15 | TECHNICAL FIELDS SEARCHED (Int.Cl.6) G06F G06G |
| A | US 5 222 193 A (BROOKS WILLIAM O ET AL) 22 June 1993 * column 17, line 36 - column 18, line 30; figure 2 * | 1,15 | |

The present search report has been drawn up for all claims

| Place of search | Date of completion of the search | Examiner |
|---|---|---|
| THE HAGUE | 4 April 1997 | Schenkels, P |

EPO FORM 1503 03.82 (P04C01)